# EUROPEAN PATENT SPECIFICATION

(11) **EP 4 425 657 B1**
(45) Date of publication and mention of the grant of the patent: **21.10.2026**
(21) Application number: 22910885.7
(22) Date of filing: 06.12.2022
(51) Int. Cl.: H01M 50/198, H01G 11/28, H01G 11/12, H01M 50/103, H01G 11/84, H01G 11/82, H01G 11/80, H01M 4/64, H01M 10/04, H01M 10/052, H01M 10/0585, H01M 50/184, H01M 50/186, H01M 50/193

(54) **POWER STORAGE DEVICE**
ENERGIESPEICHERVORRICHTUNG
DISPOSITIF DE STOCKAGE D'ÉNERGIE

(30) Priority: 21.12.2021 JP 2021206803; 22.04.2022 JP 2022070815
(43) Date of publication of application: 04.09.2024
(73) Proprietor: KABUSHIKI KAISHA TOYOTA JIDOSHOKKI, Kariya-shi, Aichi 448-8671 (JP)
(72) Inventor: OKAMOTO, Yuki, Kariya-shi, Aichi 448-8671 (JP); NATSUI, Keisuke, Kariya-shi, Aichi 448-8671 (JP); NAKAMURA, Tomohiro, Kariya-shi, Aichi 448-8671 (JP); HIROSE, Takayuki, Kariya-shi, Aichi 448-8671 (JP)
(74) Representative: TBK
(86) International application number: PCT/JP2022/044977
(87) International publication number: WO 2023/120171

(56) References cited:
- WO-A1-2008/114738
- JP-A- 2005 209 819
- JP-A- 2017 073 374
- JP-A- 2018 101 599
- JP-A- 2019 129 031
- JP-B2- 5 494 089
- US-A1- 2020 411 809

## Description

### Technical Field

The present disclosure relates to a power storage device.

### Background Art

A bipolar battery including a bipolar electrode in which a positive electrode active material layer is formed on one side of a current collector, and a negative electrode active material layer is formed on the other side is known as a power storage device (see, for example, JP 2011 - 204 386 A). In this bipolar battery, a power generating element in which bipolar electrodes and electrolyte layers (separators) are alternately stacked is sealed inside a battery exterior material. A seal material is disposed on the outer peripheral portion of a single cell layer in the power generating element to prevent short circuit through a liquid caused by the leakage of an electrolytic solution from the electrolyte layers. Document JP 2019 - 129 031 A is considered closest prior art and discloses the features of the preamble of claim 1.

### Summary of Invention

### Technical Problem

It is the object of the present invention to provide a power storage device that is capable of suppressing a decrease in battery performance due to moisture transmission.

### Solution to Problem

The object of the invention is achieved by a power storage device according to claim 1. Advantageous embodiments are carried out corresponding to the dependent claims.

A power storage device according to one aspect of the present disclosure includes: an electrode stack including a plurality of electrodes stacked in a first direction; a separator disposed between the electrodes; and a resin sealing portion surrounding the electrode stack when viewed in the first direction, and sealing a space between the electrodes, wherein the plurality of electrodes include a bipolar electrode, wherein the bipolar electrode includes: a current collector; a first active material layer provided on a first surface of the current collector; and a second active material layer provided on a second surface of the current collector, wherein the sealing portion includes: a first resin portion provided on an edge portion of the first surface to surround the first active material layer when viewed in the first direction; a second resin portion provided on an edge portion of the second surface to surround the second active material layer when viewed in the first direction; and an end surface welded portion in which outer edge portions of a plurality of resin portions including the first resin portion and the second resin portion are welded and integrated, wherein the first resin portion includes a first adhesive portion adhered to the first surface, and a first reinforcing portion integrated with a surface of the first adhesive portion opposite from the current collector, wherein the second resin portion includes a second adhesive portion adhered to the second surface, and a second reinforcing portion integrated with a surface of the second adhesive portion opposite from the current collector, and wherein a water vapour transmission rate of the end surface welded portion is less than a water vapour transmission rate of the first adhesive portion and a water vapour transmission rate of the second adhesive portion.

In the power storage device above, the resin sealing portion seals the space between the plurality of electrodes stacked in the first direction. The sealing portion includes the first resin portion, the second resin portion, and the end surface welded portion. To ensure sealing property, a resin having high adhesion to the current collector may be used for the first adhesive portion of the first resin portion and the second adhesive portion of the second resin portion. Even in this case, the water vapour transmission rate of the end surface welded portion is less than the water vapour transmission rate of the first adhesive portion and the water vapour transmission rate of the second adhesive portion. Consequently, even in the case in which the first adhesive portion and the second adhesive portion are formed of a resin having high adhesion to the current collector and having a high water vapour transmission rate, the transmission of moisture through the end surface welded portion in a direction intersecting the first direction and penetration thereof into the space between the electrodes are suppressed. As a result, the decrease in battery performance due to moisture transmission is suppressed.

An acid modification degree of a resin at the end surface welded portion may be less than an acid modification degree of a resin of the first adhesive portion and an acid modification degree of a resin of the second adhesive portion. In this case, the water vapour transmission rate of the end surface welded portion can be made less than the water vapour transmission rate of the first adhesive portion and the water vapour transmission rate of the second adhesive portion.

A crystallinity of a resin at the end surface welded portion may be greater than a crystallinity of a resin of the first adhesive portion and a crystallinity of a resin of the second adhesive portion. In this case, the water vapour transmission rate of the resin at the end surface welded portion can be made less than the water vapour transmission rate of the resin of the first adhesive portion and the water vapour transmission rate of the resin of the second adhesive portion. Furthermore, in this case, the acid modification degree of the resin at the end surface welded portion can be made less than the acid modification degree of the resin of the first adhesive portion and the acid modification degree of the resin of the second adhesive portion.

A water vapour transmission rate of the first reinforcing portion is less than the water vapour transmission rate of the first adhesive portion and the water vapour transmission rate of the second adhesive portion, and a water vapour transmission rate of the second reinforcing portion is less than the water vapour transmission rate of the first adhesive portion and the water vapour transmission rate of the second adhesive portion. In this case, the water vapour transmission rate of the end surface welded portion can easily be made less than the water vapour transmission rate of the first adhesive portion and the water vapour transmission rate of the second adhesive portion.

A proportion of a total thickness of the first adhesive portion and the second adhesive portion relative to a thickness of the plurality of resin portions may be 5% or more and 50% or less. This enables a proportion of a total volume of the first adhesive portion and the second adhesive portion relative to a volume of the end surface welded portion to be 5% or more and 50% or less. Degraded gas such as hydrogen and methane generated in the space between the electrodes is transmitted through the sealing portion and externally discharged. The first adhesive portion and the second adhesive portion transmit degraded gas more easily compared to the first reinforcing portion and the second reinforcing portion. Consequently, setting the proportion above to 5% or more makes it possible to ensure passages through which the degraded gas is transmitted through the sealing portion. Additionally, setting the proportion above to 50% or less makes it possible to maintain the proportion of the total volume of the first reinforcing portion and the second reinforcing portion relative to the volume of the end surface welded portion to a value greater than 50%. Consequently, the passages of water vapour transmitted through the end surface welded portion can be reduced, and the degradation of battery performance can be suppressed.

The sealing portion may further include a spacer disposed between the first reinforcing portion and the second reinforcing portion in the first direction, the spacer may be surface-bonded to the first reinforcing portion and the second reinforcing portion at the end surface welded portion, and a water vapour transmission rate of the spacer may be less than the water vapour transmission rate of the first adhesive portion and the water vapour transmission rate of the second adhesive portion. In this case, the water vapour transmission rate of the end surface welded portion can be made less than the water vapour transmission rate of the first adhesive portion and the water vapour transmission rate of the second adhesive portion.

The current collector may include a first current collector having the first surface, and a second current collector having the second surface, the second current collector being a separate member from the first current collector. In this case, the thickness, material, and surface treatment of the current collector can be configured in a desired combination.

### Advantageous Effects of Invention

The present disclosure is capable of providing a power storage device that is capable of suppressing a decrease in battery performance due to moisture transmission.

### Brief Description of Drawings

[FIG. 1] FIG. 1 is a schematic cross-sectional view illustrating a power storage device according to a first embodiment.
[FIG. 2] FIG. 2 is a schematic cross-sectional view illustrating a power storage cell shown in FIG. 1.
[FIG. 3] FIG. 3 is a schematic cross-sectional view for describing a method for forming a bipolar electrode unit.
[FIG. 4] FIG. 4 is a schematic cross-sectional view illustrating a power storage device according to a second embodiment.
[FIG. 5] FIG. 5 is a schematic cross-sectional view illustrating a power storage cell shown in FIG. 4.
[FIG. 6] FIG. 6 is a schematic cross-sectional view illustrating a power storage device according to a variation.

### Description of Embodiments

Embodiments of the present disclosure will be described in detail below with reference to the accompanying drawings. Same reference signs are given to the same or equivalent elements in the description of the drawings, and redundant description will be omitted.

### (Configuration of Power Storage Device)

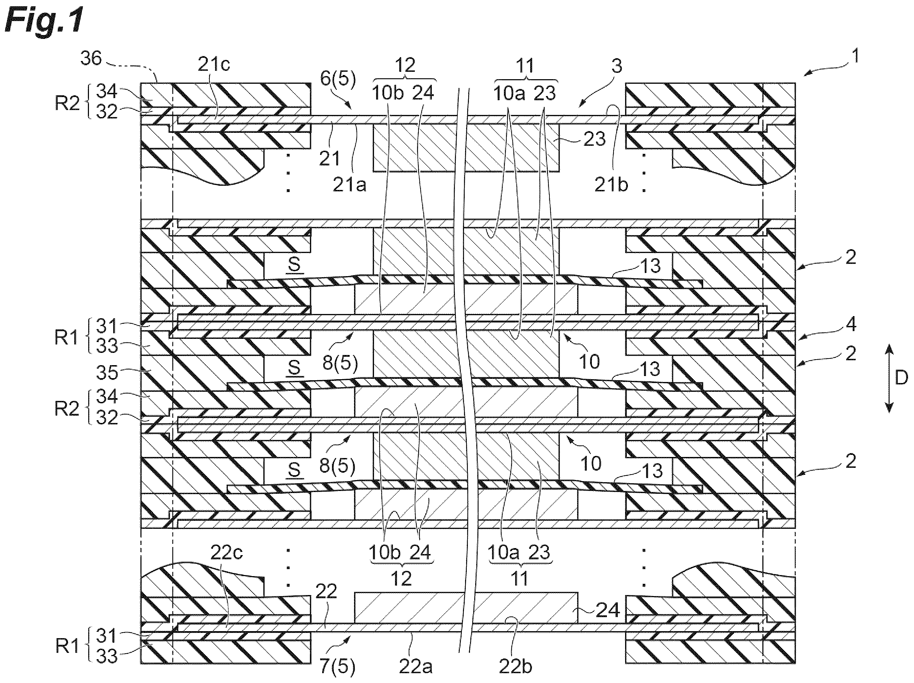

FIG. 1 is a schematic cross-sectional view illustrating a power storage device according to a first embodiment. A power storage device 1 illustrated in FIG. 1 is a power storage module used for the battery of various vehicles such as forklifts, hybrid vehicles, and electric vehicles. The power storage device 1 is a secondary battery such as a nickel-hydrogen secondary battery or a lithium-ion secondary battery. The power storage device 1 may be an electric double layer capacitor or a solid-state battery. This embodiment exemplifies a case in which the power storage device 1 is a lithium-ion secondary battery.

The power storage device 1 includes an electrode stack 3, a separator 13, and a sealing portion 4. The electrode stack 3 includes a plurality of electrodes 5 that are stacked in a direction D. The separator 13 is disposed between the electrodes 5 adjacent in the direction D. The sealing portion 4 surrounds the electrode stack 3, and seals a space S between the electrodes 5 adjacent in the direction D. The plurality of electrodes 5 include a positive terminal electrode 6, a negative terminal electrode 7, and a plurality of bipolar electrodes 8. The positive terminal electrode 6 is disposed at one end of a stack direction (direction D). The negative terminal electrode 7 is disposed at the other end of the stack direction. The plurality of bipolar electrodes 8 are disposed between the positive terminal electrode 6 and the negative terminal electrode 7.

The positive terminal electrode 6 includes a current collector 21 that has a first surface 21a and a second surface 21b facing away from each other, and a positive electrode active material layer 23 that is provided on the first surface 21a. The negative terminal electrode 7 includes a current collector 22 that has a first surface 22a and a second surface 22b facing away from each other, and a negative electrode active material layer 24 that is provided on the second surface 22b. Each bipolar electrode 8 includes a current collector 10 that has a first surface 10a and a second surface 10b facing away from each other, the positive electrode active material layer 23 (first active material layer) that is provided on the first surface 10a, and the negative electrode active material layer 24 (second active material layer) that is provided on the second surface 10b. The first surface 10a forms a positive electrode 11 together with the positive electrode active material layer 23. The second surface 10b forms a negative electrode 12 together with the negative electrode active material layer 24. Hereinafter, the current collectors 10, 21, 22 may be collectively referred to as a "current collector."

The positive electrode 11 and the negative electrode 12 are disposed such that the positive electrode active material layer 23 and the negative electrode active material layer 24 face each other in the direction D via the separator 13. In this embodiment, the positive electrode active material layer 23 and the negative electrode active material layer 24 are both formed in a rectangular shape when viewed in the direction D. The negative electrode active material layer 24 is formed slightly larger than the positive electrode active material layer 23. The entirety of the positive electrode active material layer 23 is disposed inward of an outer edge of the negative electrode active material layer 24 when viewed in the direction D.

The power storage device 1 is a cell stack having a plurality of power storage cells 2 stacked in the direction D. Each power storage cell 2 includes the positive electrode 11 and the negative electrode 12 that face each other in the direction D via the separator 13. The plurality of power storage cells 2 are stacked by sharing the same current collector 10 between a pair of the power storage cells 2 adjacent in the direction D. The plurality of power storage cells 2 are thus electrically connected in series.

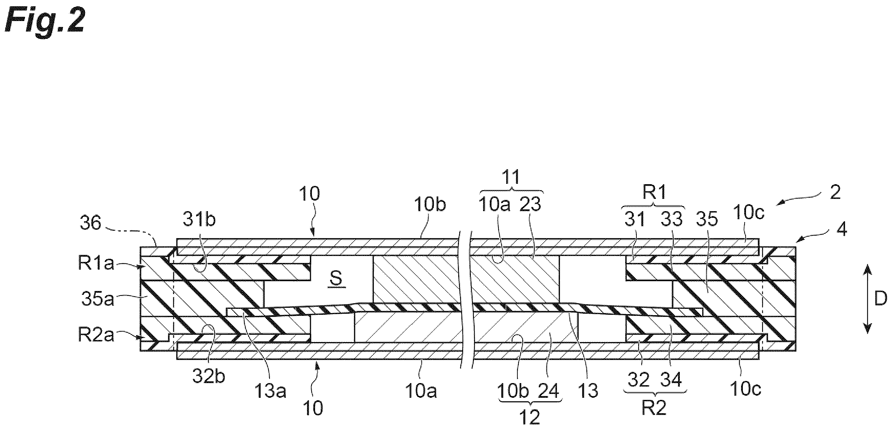

FIG. 2 is a schematic cross-sectional view illustrating a power storage cell shown in FIG. 1. As illustrated in FIGS. 1 and 2, no active material layers are provided on the first surface 10a or the second surface 10b on an edge portion 10c of the current collector 10 of the bipolar electrode 8. In other words, the first surface 10a and the second surface 10b have a region in which no active material layers are provided in the edge portion 10c. The edge portion 10c is positioned outside of the region in which the positive electrode active material layer 23 or the negative electrode active material layer 24 is provided in the current collector 10 when viewed in the direction D.

The current collector is a chemically inactive electrical conductor that keeps current flowing to the positive electrode active material layer and the negative electrode active material layer during discharging or charging of the lithium-ion secondary battery. For example, a metal material may be used for the material for forming the current collector. The current collector may be formed of one or more layers including a conductive resin material or a conductive inorganic material stacked on a layer of the metal material mentioned above. A coating layer may be formed on the surface of the current collector by a publicly known method such as plating or spray coating. The current collector may be formed, for example, in the form of a plate, a foil, a sheet, a film, or a mesh.

A metal foil such as an aluminum foil, a copper foil, a nickel foil, a titanium foil, or a stainless steel foil is used for the current collectors 10, 21, 22. The current collectors 10, 21, 22 may be an alloy foil or a clad foil of the metals above. In the case in which the current collectors 10, 21, 22 are in the form of a foil, the thicknesses of the current collectors 10, 21, 22 may be in the range of 1 µm or more and 150 µm or less. The current collectors 10, 21, 22 may be a plated foil in which, for example, copper is plated on one side of an aluminum foil. In this embodiment, a current collector in which two different metal foils of an aluminum foil and a copper foil are bonded together and integrated is used as the current collector 10 of the bipolar electrode. The first surface 10a is formed by the surface of the aluminum foil, and the second surface 10b is formed by the surface of the copper foil. Additionally, a current collector in which two different metal foils of an aluminum foil and a copper foil are bonded together and integrated may be used as the current collectors 21, 22.

The positive electrode active material layer 23 includes a positive electrode active material that is capable of storing and releasing charge carriers such as lithium ion. Examples of the positive electrode active material include complex oxides, metallic lithium, and sulfur. The composition of the complex oxides includes, for example, at least one of iron, manganese, titanium, nickel, cobalt, and aluminum, and lithium. Examples of the complex oxides include publicly known positive electrode active materials such as olivine type lithium iron phosphate (LiFePO₄), LiCoO₂, and LiNiMnCoO₂.

The negative electrode active material layer 24 includes a negative electrode active material that is capable of storing and releasing charge carriers such as lithium ion. The negative electrode active material may be a publicly known negative electrode active material such as carbon including graphite, artificial graphite, highly oriented graphite, mesocarbon microbeads, hard carbon, and soft carbon, a metallic compound, an element capable of alloying with lithium or compounds thereof, or boron-added carbon. Examples of the element capable of alloying with lithium include silicon and tin.

The positive electrode active material layer 23 and the negative electrode active material layer 24 may also include a binding agent and a conductive additive in addition to the active material. The binding agent serves to bind the active materials or the conductive additives to each other to maintain a conductive network in the electrode. Examples of the binding agent include fluorine-containing resin such as polyvinylidene fluoride, polytetrafluoroethylene, and fluororubber, thermoplastic resin such as polypropylene and polyethylene, imide-based resin such as polyimide and polyamide imide, alkoxysilyl group-containing resin, acrylic resin such as polyacrylic acid and polymethacrylic acid, styrene-butadiene rubber, carboxymethyl cellulose, alginate such as sodium alginate and ammonium alginate, water-soluble cellulose ether crosslinked body, and starch-acrylic acid graft polymer. These binding agents may be used singly or in plurality. The conductive additive is a conductive material such as acetylene black, carbon black, or graphite, and is capable of increasing electrical conductivity.

A publicly known method such as roll coating, die coating, dip coating, doctor blading, spray coating, or curtain coating is used to form the positive electrode active material layer 23 and the negative electrode active material layer 24 on the current collectors 10, 21, 22. For example, the active material and a solvent, and optionally the binding agent and the conductive additive, are mixed to produce a slurry composition for forming an active material layer, which is applied to the current collectors 10, 21, 22 and dried. The solvent that serves as a viscosity adjusting solvent for the slurry composition for forming an active material layer is, for example, N-methyl-2-pyrrolidone, methanol, methyl isobutyl ketone, or water. The slurry composition for forming an active material layer may also be compressed after being dried to increase the electrode density of the positive electrode active material layer 23 and the negative electrode active material layer 24.

The separator 13 is interposed between the positive electrode 11 and the negative electrode 12. The separator 13 separates the positive electrode 11 and the negative electrode 12 so that the positive electrode 11 and the negative electrode 12 of adjacent electrodes do not directly come into contact when the plurality of electrodes 5 are stacked. The separator 13 is an insulating member that prevents electrical shorting due to the contact between the positive electrode 11 and the negative electrode 12 of adjacent electrodes as well as a member that allows charge carriers such as lithium ion to pass therethrough.

The separator 13 has a rectangular shape that is slightly larger than the positive electrode active material layer 23 and the negative electrode active material layer 24 and slightly smaller than the current collectors 10, 21, 22 when viewed in the direction D. An end portion 13a of the separator 13 is disposed outside of the positive electrode active material layer 23 and the negative electrode active material layer 24 when viewed in the direction D. The end portion 13a of the separator 13 does not overlap the positive electrode active material layer 23 or the negative electrode active material layer 24 when viewed in the direction D. The end portion 13a of the separator 13 is fixed to the sealing portion 4.

The separator 13 is formed, for example, in a sheet-shape. The separator 13 is, for example, a porous sheet or nonwoven fabric that includes a polymer which absorbs and retains an electrolyte. Examples of the material that forms the separator 13 include polyolefin such as polypropylene or polyethylene, and polyester. The separator 13 may have a single layer structure or a multi-layer structure. In the case in which the separator 13 has a multi-layer structure, the separator 13 may include, for example, a base material layer and an adhesive layer. The separator 13 may be adhered and fixed to the positive electrode active material layer 23 and the negative electrode active material layer 24 by the adhesive layer. The separator 13 may include a ceramic layer to be a heat resistant layer. The separator 13 may be reinforced by a vinylidene fluoride resin compound.

Examples of the electrolyte impregnated in the separator 13 include a liquid electrolyte (electrolytic solution) that includes a nonaqueous solvent and an electrolyte salt dissolved in the nonaqueous solvent, and a high polymer gel electrolyte retaining, in a polymer matrix, an electrolyte salt dissolved in a nonaqueous solvent. Additionally, publicly known solvents such as cyclic carbonates, cyclic esters, chain carbonates, chain esters, and ethers can be used as the nonaqueous solvent. It should be noted that two or more of these publicly known solvents may be combined. Publicly known lithium salt such as LiClO₄, LiAsF₆, LiPF₆, LiBF₄, LiCF₃SO₃, LiN(FSO₂)₂, or LiN(CF₃SO₂)₂ can be used as the electrolyte salt. The separator 13 impregnated with an electrolyte allows charge carriers such as lithium ion in the electrolyte to pass therethrough.

The sealing portion 4 is a resin member that seals the electrode stack 3. The sealing portion 4 has a rectangular frame shape when viewed in the direction D. The sealing portion 4 may be spaced from the positive electrode active material layer 23 and the negative electrode active material layer 24 when viewed in the direction D. In the power storage cell 2, the space S is defined by the current collectors and the sealing portion 4. The sealing portion 4 seals the space S between adjacent current collectors. An electrolyte (not shown) is contained in the space S. The sealing portion 4 seals the electrolyte in the space S.

The sealing portion 4 prevents shorting between adjacent current collectors. The sealing portion 4 is formed of a resin material having electrical insulation properties. The material that forms the sealing portion 4 may be a publicly known resin material such as polyolefin, including polypropylene or polyethylene. The sealing portion 4 is adhered (bonded) to the edge portion 10c of the first surface 10a and the edge portion 10c of the second surface 10b. The sealing portion 4 maintains the spacing between adjacent current collectors by being disposed between the adjacent current collectors. The sealing portion 4 encloses the active material layer and the electrolyte inside the power storage cell 2. The sealing portion 4 prevents external leakage of the electrolyte from inside the power storage cell 2. The sealing portion 4 may be formed of a resin material having electrolyte tolerance.

The sealing portion 4 has a plurality of resin portions stacked in the direction D, and an end surface welded portion 36 which is outer edge portions of the plurality of resin portions being welded and integrated. The end surface welded portion 36 includes an outer surface that extends along the direction D of the sealing portion 4. That is, the outer edge portions of the plurality of resin portions include the outer surface of the sealing portion 4. The plurality of resin portions include a plurality of first resin portions R1, a plurality of second resin portions R2, and a plurality of spacers 35. The first resin portion R1 is a seal member provided on the first surface 10a of the current collector 10 so as to surround the positive electrode active material layer 23 when viewed in the direction D. The first resin portion R1 is also provided on the first surface 21a of the current collector 21 and the first surface 22a of the current collector 22. The second resin portion R2 is a seal member provided on the second surface 10b of the current collector 10 so as to surround the negative electrode active material layer 24 when viewed in the direction D. The second resin portion R2 is also provided on the second surface 21b of the current collector 21 and the second surface 22b of the current collector 22. The spacer 35 is sandwiched between the first resin portion R1 and the second resin portion R2 adjacent to each other. Each of the plurality of resin portions has a rectangular frame shape when viewed in the direction D. That is, the end surface welded portion 36 has a rectangular frame shape when viewed in the direction D. The end surface welded portion 36 also serves as the outer surface of the sealing portion 4, so that the sealing portion 4 has a rectangular frame shape when viewed in the direction D. Hereinafter, the first resin portion R1 and the second resin portion R2 may be collectively referred to as a "seal member."

It is required that the sealing portion 4 is formed of a resin having high adhesion to the current collector in order to increase the sealing property of the power storage cell 2 by the sealing portion 4. Among similar types of resin materials, a resin having an acid-modified group (e.g., acid-modified polyethylene) has higher adhesion to metal compared to a resin having no acid-modified groups (e.g., polyethylene). That is, a resin having a high acid modification degree has higher adhesion to metal compared to a resin having a low acid modification degree. Here, the acid modification degree of a resin refers to the proportion (content rate, mass%, volume%, blending ratio, mixture ratio, etc.) of resin components having an acid-modified group in the resin material. For example, a resin having a high acid modification degree such as acid-modified polyethylene or acid-modified polypropylene contains many resin components having an acid-modified group in the resin material. For example, a resin having a low acid modification degree such as polyethylene or polypropylene contains many resin components having no acid-modified groups in the resin material. The acid modification degree of a resin has a correlation with the water vapour transmission rate of the resin, and among similar types of resin materials, the water vapour transmission rate of a resin having a high acid modification degree (e.g., acid-modified polyethylene) is greater than the water vapour transmission rate of a resin having a low acid modification degree (e.g., polyethylene). The battery performance may decrease when moisture is transmitted through the sealing portion 4 and enters the space S. It is thus required that the sealing portion 4 achieves both the sealing property and suppression of moisture transmission. The acid modification degree is measured, for example, using a publicly known infrared absorption spectrometry. The water vapour transmission rate (WVTR) is the amount of water vapour per unit area that passes through a test piece during a unit time under prescribed temperature and humidity conditions. The water vapour transmission rate is represented by the weight in grams of water vapour per square meter of area transmitted in 24 hours [g/(m²•24h)].

For example, when a polyolefin-based resin is acid-modified by a grafting reaction, an H-group in a side chain is substituted with an acid-modified group. Maleic anhydride and the like is used as the acid-modified group. As a result of acid modification, the crystallinity of the resin will be less than it was before the acid modification. The crystallinity of the resin is also reduced due to an increase in amorphous polymer and additive in the resin material. The crystallinity of the resin refers to the proportion (content rate, mass%, volume%, blending ratio, mixture ratio) of the crystal portion in the resin material. Thus, when the crystallinity of the resin decreases, the proportion of the crystalline polymer in the entire resin material decreases. Consequently, a resin having a low crystallinity tends to have more gaps between molecules which become passages through which liquid or gas passes compared to a resin in which a large amount of crystalline polymer is blended and which has a high crystallinity. Therefore, the lower the crystallinity of the resin, the lower the liquid resistance, and the higher the water vapour transmission rate. The crystallinity of the resin can be measured, for example, by the diffraction intensity (peak height) of an X-ray diffraction. This method enables the main composition of the resin to be determined by the angle of diffraction. The crystallinity of the resin can also be measured, for example, from the intensity of the crystalline band of an infrared absorption spectrum. The crystallinity of the resin can be inferred from the crystallization temperature and the like of the resin measured using, for example, differential scanning calorimetry (DSC). This method enables the relative relationship of the crystallinities of a plurality of resins to be inferred. Specifically, when the plurality of resins have the same main composition in the same amount, the peak intensity or peak position changes by changing the blending ratios of the amorphous polymer or additive. The peak position enables the relative relationship of the crystallinities of the plurality of resins to be inferred.

The first resin portion R1 is adhered to an edge portion of the first surface 10a of the current collector 10, an edge portion of the first surface 21a of the current collector 21, and an edge portion of the first surface 22a of the current collector 22. The first resin portion R1 has a first adhesive portion 31 that is abutted against and adhered to the current collector, and a first reinforcing portion 33 that is integrated with the first adhesive portion 31 on a surface of the first adhesive portion 31 opposite from the current collector. The second resin portion R2 is adhered to an edge portion of the second surface 10b of the current collector 10, an edge portion of the second surface 21b of the current collector 21, and an edge portion of the second surface 22b of the current collector 22. The second resin portion R2 has a second adhesive portion 32 that is adhered to the current collector, and a second reinforcing portion 34 that is integrated with the second adhesive portion 32 on a surface of the second adhesive portion 32 opposite from the current collector. The first resin portion R1 adhered to the first surface 10a and the second resin portion R2 adhered to the second surface 10b of the current collector 10 reinforce the edge portion of the current collector 10. As a result, the rigidity of a bipolar electrode unit described further below increases, making it easier to handle during the manufacture. Similarly, reinforcing the edge portion of the current collector 21 increases the rigidity of a positive terminal electrode unit described further below, making it easier to handle during the manufacture. Additionally, reinforcing the edge portion of the current collector 22 increases the rigidity of a negative terminal electrode unit described further below, making it easier to handle during the manufacture.

The first adhesive portion 31 and the second adhesive portion 32 are layers for adhering the first resin portion R1 and the second resin portion R2 to the current collector. Thus, a resin material having high adhesive strength to the current collector is used for the first adhesive portion 31 and the second adhesive portion 32. For example, in the case in which a metal foil current collector is used, a resin material having an acid-modified group that has good adhesion to metal is used for the first adhesive portion 31 and the second adhesive portion 32. The resin material having an acid-modified group is, for example, acid-modified polyethylene (acid-modified PE) or acid-modified polypropylene (acid-modified PP). When similar types of resin materials are compared, a resin having an acid-modified group (a resin that is acid-modified) such as acid-modified PE or acid-modified PP has higher adhesion to metal than a resin having no acid-modified groups (a resin that is not acid-modified) such as polyethylene (PE) or polypropylene (PP). The first adhesive portion 31 may be welded to the first surface 10a of the current collector 10, the first surface 21a of the current collector 21, and the first surface 22a of the current collector 22. The second adhesive portion 32 may be welded to the second surface 10b of the current collector 10, the second surface 21b of the current collector 21, and the second surface 22b of the current collector 22.

The thickness of the first adhesive portion 31 is set to be equal to or more than a minimum film thickness that can ensure the adhesive strength required for the adhesion between the first resin portion R1 and the current collector. The thickness of the second adhesive portion 32 is set to be equal to or more than a minimum film thickness that can ensure the adhesive strength required for the adhesion between the second resin portion R2 and the current collector. From the viewpoint of suppressing transmission of moisture from outside, however, the thicknesses of the first adhesive portion 31 and the second adhesive portion 32 having an acid-modified group are set so that they are not unnecessarily thick. A resin having an acid-modified group that has good adhesion to metal tends to have a greater WATER VAPOUR TRANSMISSION RATE compared to a resin that has no acid-modified groups. That is, for example, acid-modified PE and acid-modified PP tend to have a greater water vapour transmission rate compared to PE and PP. For example, the thicknesses of the first adhesive portion 31 and the second adhesive portion 32 are 20 µm or more and 200 µm or less. Setting the thicknesses of the first adhesive portion 31 and the second adhesive portion 32 to 20 µm or more ensures the adhesive strength of the seal member to the current collector. The adhesive portions 31, 32 ensuring the adhesive strength of the seal member to the current collector enables the seal member to more appropriately seal adjacent current collectors. Additionally, setting the thicknesses of the first adhesive portion 31 and the second adhesive portion 32 to 200 µm or less enables passages for moisture transmission in the seal member to be narrow, so that moisture transmission through the seal member can be suppressed. In this embodiment, the thickness of the first adhesive portion 31 and the second adhesive portion 32 is 50 µm.

The first reinforcing portion 33 increases the rigidity of the first resin portion R1. The first reinforcing portion 33 is a resin layer that ensures the pressure capacity of the sealing portion 4. The first reinforcing portion 33 is thus a resin material having a Young's modulus greater than a Young's modulus of the first adhesive portion 31. The first reinforcing portion 33 may also function as a resin layer for suppressing moisture transmission of the sealing portion 4. In this case, the first reinforcing portion 33 is a resin material having a water vapour transmission rate less than a water vapour transmission rate of the first adhesive portion 31. The first adhesive portion 31 and the first reinforcing portion 33 are formed of the same type of resin material. The first adhesive portion 31 and the first reinforcing portion 33 are surface-bonded and integrated with each other. The first reinforcing portion 33 is surface-bonded to the first adhesive portion 31, for example, by coextrusion or heat lamination, with the interface being welded.

The second reinforcing portion 34 increases the rigidity of the second resin portion R2. The second reinforcing portion 34 is a resin layer that ensures the pressure capacity of the sealing portion 4. The second reinforcing portion 34 is thus a resin material having a Young's modulus greater than a Young's modulus of the second adhesive portion 32. The second reinforcing portion 34 may also function as a resin layer for suppressing moisture transmission of the sealing portion 4. In this case, the second reinforcing portion 34 is a resin material having a water vapour transmission rate less than a water vapour transmission rate of the second adhesive portion 32. The second adhesive portion 32 and the second reinforcing portion 34 are formed of the same type of resin material. The second adhesive portion 32 and the second reinforcing portion 34 are surface-bonded and integrated with each other. The second reinforcing portion 34 is surface-bonded to the second adhesive portion 32, for example, by coextrusion or heat lamination, with the interface being welded.

The thicknesses of the first reinforcing portion 33 and the second reinforcing portion 34 are, for example, 20 µm or more and 200 µm or less. In this embodiment, the thickness of the first reinforcing portion 33 and the second reinforcing portion 34 is 120 µm. When viewed in the direction D, outer edges of the first adhesive portion 31, the second adhesive portion 32, the first reinforcing portion 33, and the second reinforcing portion 34 overlap one another at the end surface welded portion 36 of the sealing portion 4.

The first reinforcing portion 33 may be formed of a resin having a water vapour transmission rate that is at least less than the water vapour transmission rate of the first adhesive portion 31 and the water vapour transmission rate of the second adhesive portion 32 to increase the moisture transmission suppressing effect of the sealing portion 4. The second reinforcing portion 34 may be formed of a resin having a water vapour transmission rate that is at least less than the water vapour transmission rate of the first adhesive portion 31 and the water vapour transmission rate of the second adhesive portion 32 to increase the moisture transmission suppressing effect of the sealing portion 4. Generally, among similar types of resin materials, the water vapour transmission rate of a resin having an acid-modified group is greater than the water vapour transmission rate of a resin having no acid-modified groups. Consequently, in a case in which the first adhesive portion 31 and the second adhesive portion 32 are formed of a resin material having an acid-modified group that has good adhesion to metal foil such as acid-modified PE or acid-modified PP, the first reinforcing portion 33 and the second reinforcing portion 34 are formed of a resin material such as polyethylene (PE) that is not acid-modified or polypropylene (PP) that is not acid-modified. The first reinforcing portion 33 and the second reinforcing portion 34 may be formed of the same type of resin material as the first adhesive portion 31 and the second adhesive portion 32. For example, in a case in which acid-modified PE is used for the first adhesive portion 31 and the second adhesive portion 32, polyethylene that is not acid-modified is used for the first reinforcing portion 33 and the second reinforcing portion 34. In a case in which acid-modified PP is used for the first adhesive portion 31 and the second adhesive portion 32, polypropylene that is not acid-modified is used for the first reinforcing portion 33 and the second reinforcing portion 34. Additionally, the first reinforcing portion 33 and the second reinforcing portion 34 are, for example, the same resin material as the first adhesive portion 31 and the second adhesive portion 32 such as acid-modified PE or acid-modified PP. In this case, the acid modification degree of the resin portion is adjusted or the material property is adjusted by an additive and the like so that at least the Young's modulus of the first reinforcing portion 33 and the second reinforcing portion 34 is greater than the Young's modulus of the first adhesive portion 31 and the second adhesive portion 32.

The spacer 35 is disposed between the first resin portion R1 and the second resin portion R2 in the direction D. In FIGS. 1 and 2, the spacer 35 is disposed between the first reinforcing portion 33 of the first resin portion R1 and the second reinforcing portion 34 of the second resin portion R2 in the direction D. The end portion 13a of the separator 13 may be welded and fixed to the spacer 35 or the seal member. The end portion 13a of the separator 13 may be inserted between the spacer 35 and the seal member and fixed thereto. An outer edge portion 35a of the spacer 35 is welded together with outer edge portions R1a, R2a of the seal member and integrated as the end surface welded portion 36.

The spacer 35 functions as a resin layer that suppresses the moisture transmission of the sealing portion 4 similarly to the first reinforcing portion 33 and the second reinforcing portion 34. Consequently, a water vapour transmission rate of the spacer 35 is less than the water vapour transmission rate of the first adhesive portion 31 and the water vapour transmission rate of the second adhesive portion 32. The spacer 35 may be formed of a resin material such as polyethylene (PE) that is not acid-modified or polypropylene (PP) that is not acid-modified. The spacer 35 may be formed of the same material as the first reinforcing portion 33 and the second reinforcing portion 34. In this case, the spacer 35 is sandwiched between the first reinforcing portion 33 and the second reinforcing portion 34 of the same material, so that they are easily compatible when forming the end surface welded portion 36. As a result, the forming of the end surface welded portion 36 is facilitated. The spacer 35 may also be formed of the same type of resin material as the first adhesive portion 31 and the second adhesive portion 32. For example, in the case in which the first adhesive portion 31 and the second adhesive portion 32 are formed of polyethylene (PE) that is acid-modified, the spacer 35 may be formed of polyethylene that is not acid-modified. In the case in which the first adhesive portion 31 and the second adhesive portion 32 are formed of polypropylene (PP) that is acid-modified, the spacer 35 may be formed of polypropylene that is not acid-modified. Additionally, a resin material that is the same as the first adhesive portion 31 and the second adhesive portion 32 such as acid-modified PE or acid-modified PP may be used for the spacer 35. In this case, an acid modification degree of the spacer 35 is adjusted or the material property of the spacer 35 is adjusted by an additive and the like so that the water vapour transmission rate of the spacer 35 is at least less than the water vapour transmission rate of the first adhesive portion 31 and the water vapour transmission rate of the second adhesive portion 32.

The thickness of the spacer 35 is adjusted according to the film thickness of the active material layers (positive electrode active material layer 23 and negative electrode active material layer 24) disposed between the electrodes disposed facing each other. In FIGS. 1 and 2, the spacer 35 is in surface contact with the first reinforcing portion 33 and the second reinforcing portion 34 also inside of the end surface welded portion 36. When the thickness of the spacer 35 is, for example, 50 µm or more and 600 µm or less, the film thickness of the active material layers can be ensured. Additionally, the greater the thickness of the spacer 35, the end surface welded portion 36 having a lower water vapour transmission rate can be provided. In this embodiment, the thickness of the spacer 35 is 500 µm.

When viewed in the direction D, an inner edge of the spacer 35 may be positioned outward of inner edges of the first adhesive portion 31, the second adhesive portion 32, the first reinforcing portion 33, and the second reinforcing portion 34. The inner edge of the spacer 35 may be positioned, for example, 1 mm or more outward of the inner edges of the first adhesive portion 31, the second adhesive portion 32, the first reinforcing portion 33, and the second reinforcing portion 34. In this case, the space S can be ensured. When viewed in the direction D, an outer edge of the spacer 35 coincides with the outer edges of the first adhesive portion 31, the second adhesive portion 32, the first reinforcing portion 33, and the second reinforcing portion 34. This facilitates the forming of the end surface welded layer, so that the sealing property can be improved.

The end surface welded portion 36 is the outer edge portions of the plurality of resin portions, i.e., the outer edge portion R1a of the first resin portion R1, the outer edge portion R2a of the second resin portion R2, and the outer edge portion 35a of the spacer 35, that are welded and integrated. In the end surface welded portion 36, the outer edge portions of the resin portions adjacent in the stack direction (direction D) are melted together and welded at the surface extending in the direction D. The proportion of the total thickness of the first adhesive portion 31 and the second adhesive portion 32 relative to the thickness of the resin stack is 5% or more and 50% or less. An average water vapour transmission rate of the end surface welded portion 36 is less than the water vapour transmission rate of the first adhesive portion 31 and the water vapour transmission rate of the second adhesive portion 32. Here, the average water vapour transmission rate of the end surface welded portion 36 is the average amount of water vapour per unit area that passes through the end surface welded portion 36 during a unit time under prescribed temperature and humidity conditions. An average acid modification degree of the resin at the end surface welded portion 36 is less than an acid modification degree of a resin of the first adhesive portion 31 and an acid modification degree of a resin of the second adhesive portion 32. An average crystallinity of the resin at the end surface welded portion 36 is greater than a crystallinity of the resin of the first adhesive portion 31 and a crystallinity of the resin of the second adhesive portion 32. Here, the average crystallinity of the resin at the end surface welded portion 36 refers to the proportion (mass%, volume%, blending ratio, mixture ratio) of the crystal portion included in the end surface welded portion 36 relative to the entire end surface welded portion 36.

In this embodiment, an inner edge of the end surface welded portion 36 is spaced from the end surface of the current collector, but the inner edge of the end surface welded portion 36 may be in contact with the end surface of the current collector. The inner edge of the end surface welded portion 36 may be provided to reach the inside of the end surface of the current collector.

### (Method for Manufacturing Power Storage Device)

An example of a method for manufacturing the power storage device 1 will be described. First, the positive terminal electrode 6, the negative terminal electrode 7, the plurality of bipolar electrodes 8, the plurality of first resin portions R1, and the plurality of second resin portions R2 are prepared. Then a plurality of bipolar electrode units, the positive terminal electrode unit, and the negative terminal electrode unit are formed.

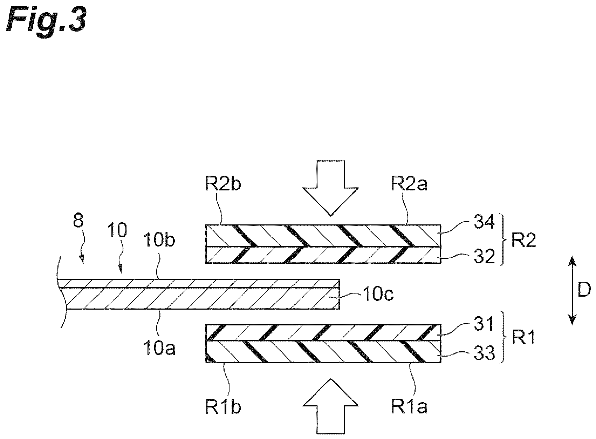

FIG. 3 is a schematic cross-sectional view for describing a method for forming the bipolar electrode unit. As illustrated in FIG. 3, the first resin portion R1, the edge portion 10c of the current collector 10 of the bipolar electrode 8, and the second resin portion R2 are disposed overlapping each other in the direction D. In doing so, the first resin portion R1 is disposed on the first surface 10a of the current collector 10 such that an inner edge portion R1b of the first resin portion R1 is in contact with the edge portion 10c, and the outer edge portion R1a of the first resin portion R1 protrudes outside of the edge portion 10c when viewed in the stack direction (direction D). Additionally, the second resin portion R2 is disposed on the second surface 10b of the current collector 10 such that an inner edge portion R2b of the second resin portion R2 is in contact with the edge portion 10c, and the outer edge portion R2a of the second resin portion R2 protrudes outside of the edge portion 10c when viewed in the stack direction (direction D).

Subsequently, the inner edge portion R1b of the first resin portion R1 and the inner edge portion R2b of the second resin portion R2 are adhered to the edge portion 10c by applying heat and pressure in the direction D. The bipolar electrode unit is thus formed.

Although illustration is omitted, the positive terminal electrode unit is formed by disposing the first resin portion R1, the positive terminal electrode 6, and the second resin portion R2 overlapping in the direction D, and applying heat and pressure in the direction D. The negative terminal electrode unit is formed by disposing the first resin portion R1, the negative terminal electrode 7, and the second resin portion R2 overlapping in the direction D, and applying heat and pressure in the direction D.

Subsequently, the positive terminal electrode unit, the plurality of bipolar electrode units, and the negative terminal electrode unit are stacked in the direction D. In doing so, the separators 13 and the spacers 35 are disposed between adjacent units. The electrode stack 3 is thus formed. Next, the end surface welded portion 36 is formed by a heating device. The heating device is, for example, an infrared heater or an ultrasonic laser. Pressure is applied from the direction D to the outer edge portions R1a, R2a of the seal member and the outer edge portions 35a of the spacers 35 that are stacked, and heat is input to the stack end surface of the outer edge portions R1a, R2a of the seal member and the outer edge portions 35a of the spacers 35 that are stacked from the planar direction (direction perpendicular to the stack direction). This welds the outer edge portions R1a, R2a of the seal member protruding outside of the edge portion 10c to each other, and forms the planar end surface welded portion 36 extending along the direction D. Thus, the power storage device 1 is manufactured.

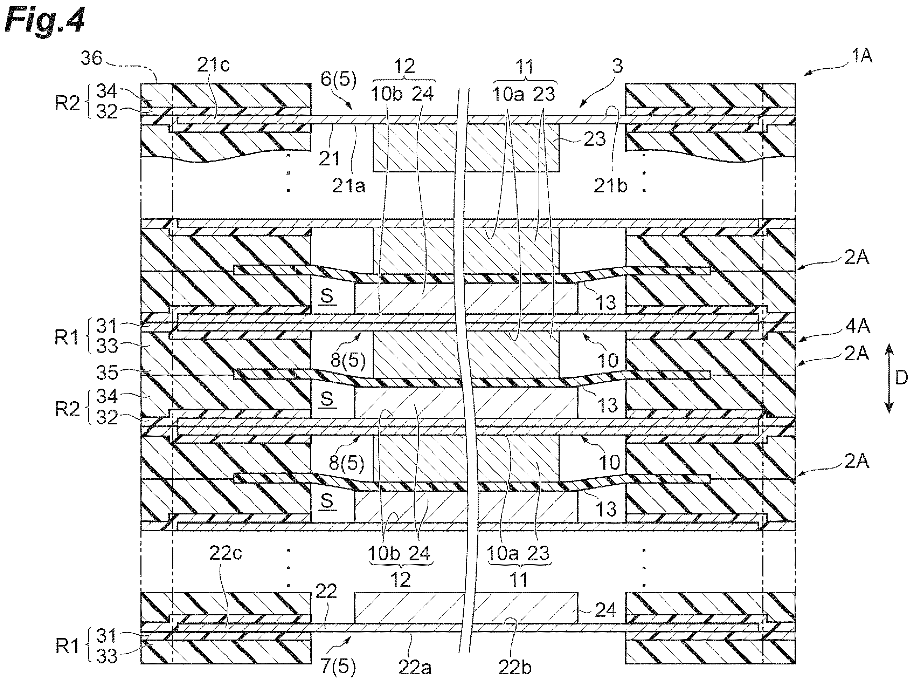

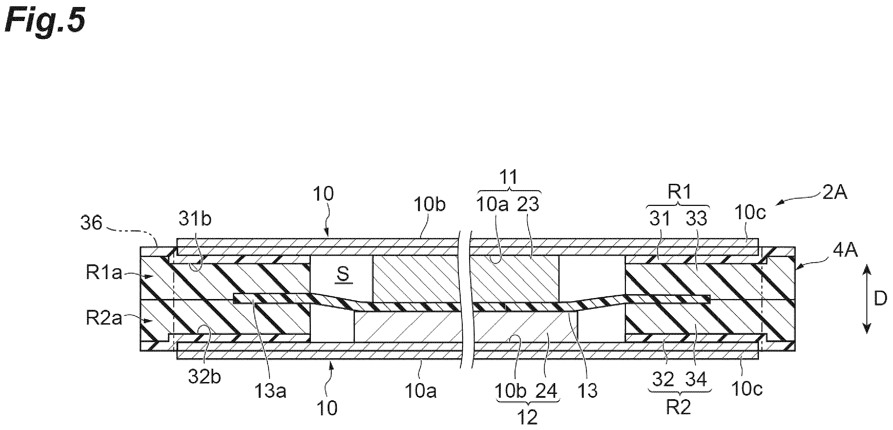

FIG. 4 is a schematic cross-sectional view illustrating a power storage device according to a second embodiment. FIG. 5 is a schematic cross-sectional view illustrating a power storage cell shown in FIG. 4. As illustrated in FIGS. 4 and 5, a power storage device 1A according to the second embodiment is different from the power storage device 1 according to the first embodiment (see FIG. 1) in that it has a sealing portion 4A. The sealing portion 4 (see FIG. 1) has a structure formed by the first resin portion R1, the spacer 35, and the second resin portion R2 overlapping each other, whereas the sealing portion 4Ahas a structure formed by the first resin portion R1 and the second resin portion R2 overlapping each other without the spacer 35 interposed therebetween. In this embodiment, the seal member has the three parts of an adhesive portion composed of the first adhesive portion 31 and the second adhesive portion 32, a reinforcing portion composed of the first reinforcing portion 33 and the second reinforcing portion 34, and a welded portion composed of the end surface welded portion 36. The power storage device 1A has a plurality of power storage cells 2A which are stacked in the direction D.

The first resin portion R1 and the second resin portion R2 are surface-welded to each other at the end surface welded portion 36, but are not surface-welded to each other inside of the end surface welded portion 36 when viewed in the stack direction (direction D). In FIGS. 4 and 5, adjacent seal members may have the end portion 13a of the separator 13 interposed therebetween also inside of the end surface welded portion 36 when viewed in the stack direction (direction D). The first reinforcing portion 33 and the second reinforcing portion 34 of the sealing portion 4A are formed thicker than the first reinforcing portion 33 and the second reinforcing portion 34 of the sealing portion 4 to ensure the space S according to the thicknesses of the active material layers of the positive and negative electrodes. The thicknesses of the first reinforcing portion 33 and the second reinforcing portion 34 of the sealing portion 4A are, for example, 100 µm or more and 400 µm or less. In this embodiment, the thickness of the first reinforcing portion 33 and the second reinforcing portion 34 is 250 µm. The end portion 13a of the separator 13 may be welded and fixed to the seal member.

### (Operation and effects)

As described above, in the power storage devices 1, 1A, the sealing portions 4, 4A seal the space S between the plurality of electrodes 5 that are stacked in the direction D. The sealing portions 4, 4A have at least the first resin portion R1, the second resin portion R2, and the end surface welded portion 36. To ensure the sealing property of the power storage devices 1, 1A (sealing portions 4, 4A), it is required that the first adhesive portion 31 of the first resin portion R1 and the second adhesive portion 32 of the second resin portion R2 are formed of a resin having high adhesion to the current collector. The water vapour transmission rate of the end surface welded portion 36 is less than the water vapour transmission rate of the first adhesive portion 31 and the water vapour transmission rate of the second adhesive portion 32. Consequently, even in the case in which the first adhesive portion 31 and the second adhesive portion 32 are formed of a resin having high adhesion to the current collector, the transmission of moisture through the sealing portions 4, 4A in a direction intersecting (e.g., perpendicular to) the direction D and penetration thereof into the space S inside the power storage cell 2 is suppressed by the end surface welded portion 36 which is the outer surface of the sealing portions 4, 4A. As a result, the decrease in battery performance due to moisture transmission is suppressed.

In the battery disclosed in Patent Literature 1, the seal member is not end surface-welded, and the entire power generating element is vacuum-sealed inside a laminate film. The power storage devices 1, 1A have the end surface welded portion 36 which has a low water vapour transmission rate as described above, so that moisture transmission can be suppressed by the end surface welded portion 36 without covering them entirely with a laminate film.

In a large battery, the area of the side surface of the electrode stack 3 along the direction D is large, so that the cross-sectional area (opening area) for moisture transmission is large. In the power storage devices 1, 1A, the transmission of moisture through the sealing portions 4, 4A in the direction intersecting the direction D can be suppressed by the end surface welded portion 36. Consequently, the power storage devices 1, 1A are especially advantageous for large batteries.

An acid modification degree (e.g., average acid modification degree) of the resin of the end surface welded portion 36 is less than an acid modification degree (e.g., average acid modification degree) of the resin of the adhesive portion of the seal member. The water vapour transmission rate of the end surface welded portion 36 can thus be made less than the water vapour transmission rate of the adhesive portion of the seal member.

The water vapour transmission rate of the reinforcing portion composed of the first reinforcing portion 33 and the second reinforcing portion 34 of the seal member is less than the water vapour transmission rate of the adhesive portion of the seal member. Thus, the water vapour transmission rate of the end surface welded portion 36 can easily be made less than the water vapour transmission rate of the adhesive portion of the seal member.

The end surface welded portions 36 of the power storage devices 1, 1A are formed by stacking the plurality of resin portions including the seal member, and surface-welding end surfaces of adjacent resin portions to each other along the direction D. The end surface welded portion 36 of the power storage device 1 is a composite material in which the outer edge portions R1a, R2a of the seal member composed of the adhesive portion and the reinforcing portion and the outer edge portion 35a of the spacer 35 are melted together and integrated. The end surface welded portion 36 of the power storage device 1A is a composite material in which the outer edge portions R1a, R2a of the seal member composed of the adhesive portion and the reinforcing portion are melted together and integrated. The end surface welded portion 36 has a predetermined thickness when viewed in the direction D. In these end surface welded portions 36, the plurality of resin layers may be melted until the boundaries between the resin layers have disappeared.

The proportion of the total thickness of the first adhesive portion 31 and the second adhesive portion 32 relative to the thickness of the plurality of resin portions is 5% or more and 50% or less. Consequently, the proportion of the total volume of the first adhesive portion 31 and the second adhesive portion 32 relative to the volume of the end surface welded portion 36 can be 5% or more and 50% or less. Gas such as hydrogen and methane generated inside the power storage cell 2 is transmitted through the sealing portion 4 and externally discharged. The adhesive portion of the seal member transmits degraded gas more easily compared to the reinforcing portion of the seal member. That is, the first adhesive portion 31 and the second adhesive portion 32 transmit gas more easily compared to the first reinforcing portion 33 and the second reinforcing portion 34. Setting the proportion above to 5% or more makes it possible to ensure passages through which the gas is transmitted through the sealing portion 4. Consequently, the rise in internal pressure of the power storage devices 1, 1A can be suppressed. Additionally, setting the total occupancy to 50% or less makes it possible to maintain the proportion of the total volume of the first reinforcing portion 33 and the second reinforcing portion 34 included in the end surface welded portion 36 relative to the volume of the end surface welded portion 36 to a value greater than 50%. Consequently, the passages of water vapour transmitted through the end surface welded portion 36 can be reduced, and the degradation of battery performance can be suppressed. Furthermore, since the end surface welded portion 36 is integrated, the rigidity of the sealing portions 4, 4A can be increased. The pressure capacity of the sealing portions 4, 4A can thus be maintained.

In the power storage device 1, the inner edge of the spacer 35 is positioned outward of the inner edges of the first adhesive portion 31, the second adhesive portion 32, the first reinforcing portion 33, and the second reinforcing portion 34 when viewed in the direction D. The space S can thus be kept large. This makes it possible, for example, to ensure extra space that can contain gas generated inside the space S by various electrochemical reactions accompanying charging and discharging. As a result, the long term pressure resistance (creep pressure resistance) of the power storage device 1 can be improved.

A current collector in which an aluminum foil having the first surface 10a and a copper foil having the second surface 10b are bonded together and integrated is used as the current collector 10 of the bipolar electrode. The current collector 10 thus includes two metal foils which are separate members, so that the thickness, material, and surface treatment of the current collector 10 can be configured in a desired combination.

When viewed in the direction D, an inner edge of the welded region of the spacer 35 and the seal member is positioned outward of an inner edge of the bonded region of the seal member and the current collector. Consequently, a part of stress generated by deformation of the current collector moves from the inner edge of the bonded region of the seal member and the current collector to the inner edge of the welded region of the spacer 35 and the seal member. Since the stress can be distributed in this way, removal of the sealing portion 4 from the current collector can be suppressed even when the internal pressure of the space S rises. As a result, reduction in the sealing property can be suppressed.

The present disclosure is not limited to the embodiments above.

Although the first resin portion R1 is provided on the first surface 22a of the negative terminal electrode 7 in the power storage devices 1, 1A, the first resin portion R1 need not be provided, or only the first adhesive portion 31 may be provided. Although the second resin portion R2 is provided on the second surface 21b of the positive terminal electrode 6, the second resin portion R2 need not be provided, or only the second adhesive portion 32 may be provided.

The end surface welded portion 36 of the power storage device 1 may be formed by pressing a heat plate against the outer edge portions R1a, R2a of the seal member and the outer edge portion 35a of the spacer 35. The end surface welded portion 36 of the power storage device 1A may be formed by pressing a heat plate against the outer edge portions R1a, R2a of the seal member.

In the power storage devices 1, 1A, at least one laminate film may be applied to all or a part of the side surface of the end surface welded portion 36 extending in the direction D to cover all or a part of the side surface of the end surface welded portion 36 extending in the direction D with the laminate film. Additionally, in the power storage devices 1, 1A, a laminate film may be applied to all or a part of the surface of the first resin portion R1 opposite from the first surface 22a of the negative terminal electrode 7, the first resin portion R1 being provided on the first surface 22a. All or a part of the surface of the first resin portion R1 of the negative terminal electrode 7 opposite from the first surface 22a may be covered with a laminate film. Additionally, in the power storage devices 1, 1A, a laminate film may be applied to all or a part of the surface of the second resin portion R2 opposite from the second surface 21b of the positive terminal electrode 6, the second resin portion R2 being provided on the second surface 21b. All or a part of the surface of the second resin portion R2 of the positive terminal electrode 6 opposite from the second surface 21b may be covered with a laminate film. These configurations can further suppress moisture transmission. However, the laminate film is to be provided such that the second surface 21b of the positive terminal electrode 6 and the first surface 22a of the negative terminal electrode 7, which are to be electrode outlets, are exposed. For example, a publicly known composite laminate film in which a metal foil and a resin layer are adhered can be used as the laminate film. Metal such as aluminum, aluminum alloy, stainless steel, or nickel alloy can be used for the metal foil of the composite laminate film. Resin such as polyethylene, ethylene vinyl acetate, or polyethylene terephthalate can be used for the resin layer of the composite laminate film.

The spacer 35 may have a stack structure in which a plurality of resin layers are stacked. Overlapping the plurality of resin layers facilitates the adjustment of the thickness of the spacer. Similarly, the first adhesive portion 31, the second adhesive portion 32, the first reinforcing portion 33, and the second reinforcing portion 34 may also each have a stack structure in which a plurality of resin layers are stacked and welded. The spacer 35 can be formed by overlapping and welding the plurality of resin layers, which facilitates the adjustment of height.

In the power storage devices 1, 1A, the first adhesive portion 31 and the first reinforcing portion 33 may be formed of different types of resin materials. For example, the first adhesive portion 31 may be formed of acid-modified PE, and the first reinforcing portion 33 may be formed of PP. The second adhesive portion 32 and the second reinforcing portion 34 may be formed of different types of resin materials. For example, the second adhesive portion 32 may be formed of acid-modified PE, and the second reinforcing portion 34 may be formed of PP.

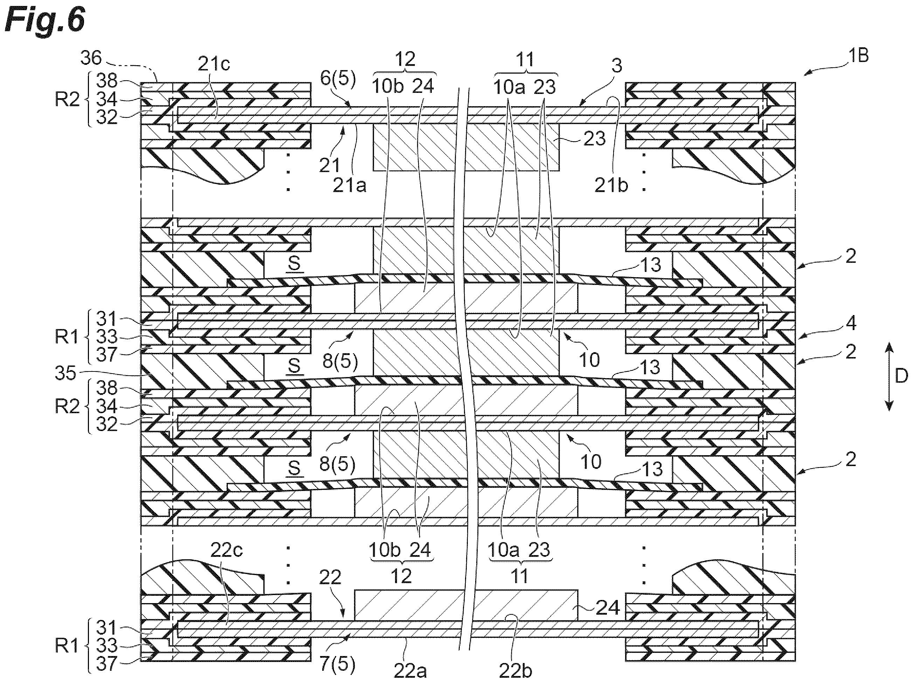

FIG. 6 is a schematic cross-sectional view illustrating a power storage device according to a variation. As illustrated in FIG. 6, a power storage device 1B according to the variation is different from the power storage device 1 (see FIG. 1) mainly in that the first resin portion R1 further has a third adhesive portion 37, and the second resin portion R2 further has a fourth adhesive portion 38. The third adhesive portion 37 is integrated with a surface of the first reinforcing portion 33 opposite from the first adhesive portion 31. The fourth adhesive portion 38 is integrated with a surface of the second reinforcing portion 34 opposite from the second adhesive portion 32. The power storage device 1B is also different from the power storage device 1 in that current collectors in which two different metal foils of an aluminum foil and a copper foil are bonded together and integrated are used as the current collectors 21, 22. The current collectors 21, 22 may be one metal foil. The spacer 35 is disposed between the first resin portion R1 and the second resin portion R2 in the direction D. The spacer 35 is different from the power storage device 1 (see FIG. 1) in that it is disposed between the third adhesive portion 37 and the fourth adhesive portion 38 in the direction D.

The average water vapour transmission rate of the end surface welded portion 36 is less than water vapour transmission rates of the third adhesive portion 37 and the fourth adhesive portion 38. In this case, the average water vapour transmission rate of the end surface welded portion 36 is less than an average water vapour transmission rate of the resin of all the adhesive portions of the seal member (e.g., an average water vapour transmission rate of the resin of all the adhesive portions of the first adhesive portion 31, the second adhesive portion 32, the third adhesive portion 37, and the fourth adhesive portion 38 combined). The third adhesive portion 37 and the fourth adhesive portion 38 may be formed of an acid-modified resin material. In this case, an acid modification degree of the third adhesive portion 37 and an acid modification degree of the fourth adhesive portion 38 may be adjusted to be greater than the acid modification degree (e.g., average acid modification degree) of the resin of the end surface welded portion 36. Additionally, the acid modification degree of each of the adhesive portions of the seal member may be adjusted so that the acid modification degree of the end surface welded portion 36 is less than the acid modification degree of the resin of all the adhesive portions of the seal member (e.g., average acid modification degree of the resin of all the adhesive portions of the first adhesive portion 31, the second adhesive portion 32, the third adhesive portion 37, and the fourth adhesive portion 38 combined).

A crystallinity of the resin of the third adhesive portion 37 and a crystallinity of the resin of the fourth adhesive portion 38 may be adjusted so that a crystallinity (e.g., average crystallinity) of the resin of the end surface welded portion 36 is greater than the crystallinity of the resin of the third adhesive portion 37 and the crystallinity of the resin of the fourth adhesive portion 38. Additionally, a crystallinity of each of the adhesive portions of the seal member may be adjusted so that a crystallinity of the end surface welded portion 36 is greater than a crystallinity of the resin of all the adhesive portions of the seal member (e.g., average crystallinity of the resin of all the adhesive portions of the first adhesive portion 31, the second adhesive portion 32, the third adhesive portion 37, and the fourth adhesive portion 38 combined).

In this case, the third adhesive portion 37 and the fourth adhesive portion 38 may be formed of the same type of resin material as the first adhesive portion 31 and the second adhesive portion 32, or may be formed of a different type of resin material from the first adhesive portion 31 and the second adhesive portion 32. For example, the first adhesive portion 31 and the second adhesive portion 32 may be formed of acid-modified PE, and the third adhesive portion 37 and the fourth adhesive portion 38 may be formed of acid-modified PP. In a case in which the third adhesive portion 37 and the fourth adhesive portion 38 are formed of the same type of resin material and in the same thickness as the first adhesive portion 31 and the second adhesive portion 32, sandwiching the reinforcing portion composed of the first reinforcing portion 33 or the second reinforcing portion 34 between adhesive portions formed of the same material in the same thickness enables warping of the first resin portion R1 and the second resin portion R2 to be suppressed, and enables poor welding that occurs when welding the first resin portion R1 and the second resin portion R2 to the current collector 10 as illustrated in FIG. 3 to be suppressed.

The embodiments and variations above may be combined as appropriate.

### Reference Signs List

1, 1A...Power storage device, 4, 4A... Sealing portion, 5... Electrode, 8...Bipolar electrode, 10...Current collector, 10a...First surface, 10b...Second surface, 10c...Edge portion, 13... Separator, 21...Current collector, 21a...First surface, 21b...Second surface, 22...Current collector, 22a...First surface, 22b... Second surface, 23...Positive electrode active material layer (First active material layer), 24...Negative electrode active material layer (Second active material layer), 31... First adhesive portion, 32... Second adhesive portion, 33...First reinforcing portion, 34... Second reinforcing portion, 35... Spacer, 35a...Outer edge portion, 36...End surface welded portion, R1...First resin portion, R1a...Outer edge portion, R2...Second resin portion, R2a...Outer edge portion, S...Space.

## Claims

1. A power storage device (1, 1A) comprising:
an electrode stack including a plurality of electrodes (5) stacked in a first direction (D);
a separator (13) disposed between the electrodes (13); and
a resin sealing portion (4) surrounding the electrode stack when viewed in the first direction, and sealing a space between the electrodes (5),
wherein the plurality of electrodes (5) includes a bipolar electrode (8),
wherein the bipolar electrode (8) includes:
a current collector (10, 21, 22) having a first surface (10a, 21a) and a second surface (10b, 22b) facing away from each other;
a first active material layer (23) provided on the first surface (10a, 21a) of the current collector (10, 21); and
a second active material layer (24) provided on the second surface (10b, 22b) of the current collector (10, 22),
wherein the sealing portion (4) includes:
a first resin portion (R1) provided on an edge portion of the first surface (10a, 21a) to surround the first active material layer (23) when viewed in the first direction (D);
a second resin portion (R2) provided on an edge portion of the second surface (10b, 22b) to surround the second active material layer (24) when viewed in the first direction (D); and
an end surface welded portion (36) in which outer edge portions of a plurality of resin portions including the first resin portion (R1) and the second resin portion (R2) are welded and integrated,
**characterised in that**
the first resin portion (R1) includes a first adhesive portion (31) adhered to the first surface (10a, 21a), and a first reinforcing portion (33) integrated with a surface of the first adhesive portion (31) opposite from the current collector (10, 21),
wherein the second resin portion (R2) includes a second adhesive portion (32) adhered to the second surface (10b, 22b), and a second reinforcing portion (34) integrated with a surface of the second adhesive portion (32) opposite from the current collector (10, 22),
wherein, when viewed in the first direction (D), outer edges of the first adhesive portion (31), the second adhesive portion (32), the first reinforcing portion (33), and the second reinforcing portion (34) overlap one another at the end surface welded portion (36),
wherein, in the end surface welded portion (36), the outer edge portions of the resin portions adjacent in the first direction (D) are melted together to form the end surface welded portion (36) extending along the first direction (D),
wherein a water vapour transmission rate of the first reinforcing portion (33) is less than a water vapour transmission rate of the first adhesive portion (31) and a water vapour transmission rate of the second adhesive portion (32),
wherein a water vapour transmission rate of the second reinforcing portion (34) is less than the water vapour transmission rate of the first adhesive portion (31) and the water vapour transmission rate of the second adhesive portion (32), and
wherein a water vapour transmission rate of the end surface welded portion (36) is less than the water vapour transmission rate of the first adhesive portion (31) and the water vapour transmission rate of the second adhesive portion (32).

2. The power storage device (1, 1A) according to claim 1,
wherein an acid modification degree of a resin at the end surface welded portion (36) is less than an acid modification degree of a resin of the first adhesive portion (31) and an acid modification degree of a resin of the second adhesive portion (32).

3. The power storage device (1, 1A) according to claim 1 or 2,
wherein a crystallinity of a resin at the end surface welded portion (36) is greater than a crystallinity of a resin of the first adhesive portion (31) and a crystallinity of a resin of the second adhesive portion (32).

4. The power storage device (1, 1A) according to any one of claims 1 to 3, wherein a proportion of a total thickness of the first adhesive portion (31) and the second adhesive portion (32) relative to a thickness of the plurality of resin portions is 5% or more and 50% or less.

5. The power storage device (1, 1A) according to any one of claims 1 to 4,
wherein the sealing portion (4) further includes a spacer (35) disposed between the first reinforcing portion (33) and the second reinforcing portion (34) in the first direction,
wherein the spacer (35) is surface-bonded to the first reinforcing portion (33) and the second reinforcing portion (34) at the end surface welded portion, and
wherein a water vapour transmission rate of the spacer (35) is less than the water vapour transmission rate of the first adhesive portion (31) and the water vapour transmission rate of the second adhesive portion (32).

6. The power storage device (1, 1A) according to any one of claims 1 to 5, wherein the current collector (10, 21, 22) includes a first current collector having the first surface (10a, 21a), and a second current collector having the second surface (10b, 22b), the second current collector being a separate member from the first current collector.

## Patentansprüche

1. Energiespeichervorrichtung (1, 1A), mit:
einem Elektrodenstapel, der eine Vielzahl von Elektroden (5) umfasst, die in einer ersten Richtung (D) gestapelt sind;
einem zwischen den Elektroden (5) angeordneten Separator (13); und
einem Harzversiegelungsabschnitt (4), der den Elektrodenstapel in der ersten Richtung betrachtet umgibt und einen Raum zwischen den Elektroden (5) abdichtet,
wobei die mehreren Elektroden (5) eine bipolare Elektrode (8) haben,
wobei die bipolare Elektrode (8) hat:
einen Stromkollektor (10, 21, 22) mit einer ersten Oberfläche (10a, 21a) und einer zweiten Oberfläche (10b, 22b), die einander abgewandt sind;
eine erste Aktivmaterialschicht (23), die auf der ersten Oberfläche (10a, 21a) des Stromkollektors (10, 21) vorgesehen ist; und
eine zweite Aktivmaterialschicht (24), die auf der zweiten Oberfläche (10b, 22b) des Stromkollektors (10, 22) vorgesehen ist,
wobei der Dichtungsabschnitt (4) umfasst:
einen ersten Harzabschnitt (R1), der an einem Randabschnitt der ersten Oberfläche (10a, 21a) vorgesehen ist, um in der ersten Richtung (D) betrachtet die erste Aktivmaterialschicht (23) zu umgeben;
einen zweiten Harzabschnitt (R2), der an einem Randabschnitt der zweiten Oberfläche (10b, 22b) vorgesehen ist, um in der ersten Richtung (D) betrachtet die zweite aktive Materialschicht (24) zu umgeben; und
einen Endflächen-Schweißabschnitt (36), in dem Außenrandabschnitte einer Vielzahl von Harzabschnitten, einschließlich des ersten Harzabschnitts (R1) und des zweiten Harzabschnitts (R2), verschweißt und integriert sind,
**dadurch gekennzeichnet, dass**
der erste Harzabschnitt (R1) einen ersten Klebeabschnitt (31) hat, der an der ersten Oberfläche (10a, 21a) haftet, sowie einen ersten Verstärkungsabschnitt (33), der mit einer dem Stromkollektor (10, 21) gegenüberliegenden Oberfläche des ersten Klebeabschnitts (31) integriert ist,
wobei der zweite Harzabschnitt (R2) einen zweiten Klebeabschnitt (32) hat, der an der zweiten Oberfläche (10b, 22b) haftet, und einen zweiten Verstärkungsabschnitt (34) hat, der mit einer dem Stromkollektor (10, 22) gegenüberliegenden Oberfläche des zweiten Klebeabschnitts (32) integriert ist,
wobei, die Außenkanten des ersten Klebeabschnitts (31), des zweiten Klebeabschnitts (32), des ersten Verstärkungsabschnitts (33) und des zweiten Verstärkungsabschnitts (34) sich in der ersten Richtung (D) betrachtet am Endflächen-Schweißabschnitt (36) überlappen,
wobei im Endflächen-Schweißabschnitt (36) die in der ersten Richtung (D) benachbarten Außenkantenabschnitte der Harzabschnitte miteinander verschmolzen sind, um den sich entlang der ersten Richtung (D) erstreckenden Endflächen-Schweißabschnitt (36) zu bilden,
wobei die Wasserdampfdurchlässigkeit des ersten Verstärkungsabschnitts (33) geringer ist als die Wasserdampfdurchlässigkeit des ersten Klebeabschnitts (31) und die Wasserdampfdurchlässigkeit des zweiten Klebeabschnitts (32),
wobei die Wasserdampfdurchlässigkeit des zweiten Verstärkungsabschnitts (34) geringer ist als die Wasserdampfdurchlässigkeit des ersten Klebstoffabschnitts (31) und die Wasserdampfdurchlässigkeit des zweiten Klebstoffabschnitts (32), und
wobei die Wasserdampfdurchlässigkeit des Endflächen-Schweißabschnitts (36) geringer ist als die Wasserdampfdurchlässigkeit des ersten Klebeabschnitts (31) und die Wasserdampfdurchlässigkeit des zweiten Klebeabschnitts (32).

2. Energiespeichervorrichtung (1, 1A) nach Anspruch 1,
wobei der Säuremodifizierungsgrad eines Harzes am Endflächen-Schweißabschnitt (36) geringer ist als der Säuremodifizierungsgrad eines Harzes des ersten Klebeabschnitts (31) und der Säuremodifizierungsgrad eines Harzes des zweiten Klebeabschnitts (32).

3. Energiespeichervorrichtung (1, 1A) nach Anspruch 1 oder 2,
wobei die Kristallinität eines Harzes im Endflächen-Schweißabschnitt (36) größer ist als die Kristallinität eines Harzes des ersten Klebeabschnitts (31) und die Kristallinität eines Harzes des zweiten Klebeabschnitts (32).

4. Energiespeichervorrichtung (1, 1A) nach einem der Ansprüche 1 bis 3,
wobei ein Anteil der Gesamtdicke des ersten Klebeabschnitts (31) und des zweiten Klebeabschnitts (32) im Verhältnis zur Dicke der mehreren Harzabschnitte 5 % oder mehr und 50 % oder weniger beträgt.

5. Energiespeichervorrichtung (1, 1A) nach einem der Ansprüche 1 bis 4,
wobei der Dichtungsabschnitt (4) ferner einen Abstandshalter (35) hat, der in der ersten Richtung zwischen dem ersten Verstärkungsabschnitt (33) und dem zweiten Verstärkungsabschnitt (34) angeordnet ist,
wobei der Abstandshalter (35) an der Endflächen-Schweißstelle mit dem ersten Verstärkungsabschnitt (33) und dem zweiten Verstärkungsabschnitt (34) oberflächenverbunden ist, und
wobei die Wasserdampfdurchlässigkeit des Abstandshalters (35) geringer ist als die Wasserdampfdurchlässigkeit des ersten Klebstoffabschnitts (31) und die Wasserdampfdurchlässigkeit des zweiten Klebstoffabschnitts (32).

6. Energiespeichervorrichtung (1, 1A) nach einem der Ansprüche 1 bis 5,
wobei der Stromkollektor (10, 21, 22) einen ersten Stromkollektor mit der ersten Oberfläche (10a, 21a) und einen zweiten Stromkollektor mit der zweiten Oberfläche (10b, 22b) hat, wobei der zweite Stromkollektor ein vom ersten Stromkollektor getrenntes Element ist.

## Revendications

1. Dispositif de stockage d'énergie (1, 1A) comprenant :
un empilement d'électrodes comportant une pluralité d'électrodes (5) empilées dans une première direction (D) ;
un séparateur (13) disposé entre les électrodes (13) ; et
une partie de scellement en résine (4) entourant l'empilement d'électrodes lorsque vue dans la première direction, et scellant un espace entre les électrodes (5),
dans lequel la pluralité d'électrodes (5) comporte une électrode bipolaire (8),
dans lequel l'électrode bipolaire (8) comporte :
un collecteur de courant (10, 21, 22) comportant une première surface (10a, 21a) et une deuxième surface (10b, 22b) opposées l'une à l'autre,
une première couche de matériau actif (23) fournie sur la première surface (10a, 21a) du collecteur de courant (10, 21) ; et
une deuxième couche de matériau actif (24) fournie sur la deuxième surface (10b, 22b) du collecteur de courant (10, 22),
dans lequel la partie de scellement (4) comporte :
une première partie de résine (R1) fournie sur une partie de bord de la première surface (10a, 21a) pour entourer la première couche de matériau actif (23) lorsqu'elle est vue dans la première direction (D) ;
une deuxième partie de résine (R2) disposée sur une partie de bord de la deuxième surface (10b, 22b) pour entourer la deuxième couche de matériau actif (24) lorsqu'elle est vue dans la première direction (D) ; et
une partie soudée de surface d'extrémité (36) dans laquelle des parties de bord externe d'une pluralité de parties de résine comprenant la première partie de résine (R1) et la deuxième partie de résine (R2) sont soudées et intégrées,
**caractérisé en ce que**
la première partie de résine (R1) comprend une première partie adhésive (31) collée à la première surface (10a, 21a), et une première partie de renforcement (33) intégrée avec une surface de la première partie adhésive (31) opposée au collecteur de courant (10, 21),
dans lequel la deuxième partie de résine (R2) comprend une deuxième partie adhésive (32) collée à la deuxième surface (10b, 22b), et une deuxième partie de renforcement (34) intégrée à une surface de la deuxième partie adhésive (32) opposée au collecteur de courant (10, 22),
dans lequel, lorsqu'ils sont vus dans la première direction (D), des bords extérieurs de la première partie adhésive (31), de la deuxième partie adhésive (32), de la première partie de renforcement (33) et de la deuxième partie de renforcement (34) se chevauchent au niveau de la partie soudée de surface d'extrémité (36),
dans lequel, dans la partie soudée de surface d'extrémité (36), les parties de bord externe des parties de résine adjacentes dans la première direction (D) sont fondues ensemble pour former la partie soudée de surface d'extrémité (36) s'étendant le long de la première direction (D),
dans lequel un taux de transmission de vapeur d'eau de la première partie de renforcement (33) est inférieur à un taux de transmission de vapeur d'eau de la première partie adhésive (31) et à un taux de transmission de vapeur d'eau de la deuxième partie adhésive (32),
dans lequel un taux de transmission de vapeur d'eau de la deuxième partie de renforcement (34) est inférieur au taux de transmission de vapeur d'eau de la première partie adhésive (31) et au taux de transmission de vapeur d'eau de la deuxième partie adhésive (32), et
dans lequel un taux de transmission de vapeur d'eau de la partie soudée de surface d'extrémité (36) est inférieur au taux de transmission de vapeur d'eau de la première partie adhésive (31) et au taux de transmission de vapeur d'eau de la deuxième partie adhésive (32).

2. Dispositif de stockage d'énergie (1, 1A) selon la revendication 1,
dans lequel le degré de modification par un acide d'une résine au niveau de la partie soudée de surface d'extrémité (36) est inférieur au degré de modification par un acide d'une résine de la première partie adhésive (31) et au degré de modification par un acide d'une résine de la deuxième partie adhésive (32).

3. Dispositif de stockage d'énergie (1, 1A) selon la revendication 1 ou 2,
dans lequel une cristallinité d'une résine au niveau de la partie soudée de surface d'extrémité (36) est supérieure à une cristallinité d'une résine de la première partie adhésive (31) et à une cristallinité d'une résine de la deuxième partie adhésive (32).

4. Dispositif de stockage d'énergie (1, 1A) selon l'une quelconque des revendications 1 à 3. dans lequel une proportion d'une épaisseur totale de la première partie adhésive (31) et de la deuxième partie adhésive (32) par rapport à une épaisseur de la pluralité de parties de résine est de 5 % ou plus et de 50 % ou moins.

5. Dispositif de stockage d'énergie (1, 1A) selon l'une quelconque des revendications 1 à 4.
dans lequel la partie de scellement (4) comprend en outre une entretoise (35) disposée entre la première partie de renforcement (33) et la deuxième partie de renforcement (34) dans la première direction,
dans lequel l'entretoise (35) est liée en surface à la première partie de renforcement (33) et à la deuxième partie de renforcement (34) au niveau de la partie soudée de surface d'extrémité, et dans lequel un taux de transmission de vapeur d'eau de l'entretoise (35) est inférieur au taux de transmission de vapeur d'eau de la première partie adhésive (31) et au taux de transmission de vapeur d'eau de la deuxième partie adhésive (32).

6. Dispositif de stockage d'énergie (1, 1A) selon l'une quelconque des revendications 1 à 5. dans lequel le collecteur de courant (10, 21, 22) comporte un premier collecteur de courant ayant la première surface (10a, 21a), et un deuxième collecteur de courant ayant la deuxième surface (10b, 22b), le deuxième collecteur de courant étant un élément distinct du premier collecteur de courant.
